# EUROPÄISCHE PATENTANMELDUNG

(11) **EP 4 596 351 A1**
(43) Veröffentlichungstag der Anmeldung: **06.08.2025**
(21) Anmeldenummer: 25153571.2
(22) Anmeldetag: 23.01.2025
(51) Int. Cl.: B60W 40/08, B62D 15/02, G06N 3/045, B60W 50/00

(54) **VERFAHREN UND VORRICHTUNG ZUM ERKENNEN EINES HANDS-OFF-ZUSTANDS AN EINEM LENKRAD EINES FAHRZEUGS**

(30) Priorität: 01.02.2024 DE 102024200940
(71) Anmelder: Volkswagen Aktiengesellschaft, 38440 Wolfsburg (DE)
(72) Erfinder: Stahl, Felix, 38440 Wolfsburg (DE); Kaste, Jonas, 38440 Wolfsburg (DE); Kallmeyer, Felix, 38440 Wolfsburg (DE)

(57) **Zusammenfassung**

Die Erfindung betrifft ein Verfahren zum Erkennen eines Hands-Off-Zustands (6) an einem Lenkrad (50) eines Fahrzeugs (50), wobei mindestens eine Lenkungsgröße (4) an dem Lenkrad (51) erfasst wird, wobei mindestens eine Kontextinformation (7) erfasst und/oder bestimmt und/oder abgefragt wird, wobei die erfasste mindestens eine Lenkungsgröße (4) und die mindestens eine Kontextinformation (7) einem trainierten Maschinenlernmodell (5) als Eingangsdaten zugeführt werden, wobei das Maschinenlernmodell (5) darauf trainiert ist, einen Hands-Off-Zustand (6) ausgehend von zumindest der mindestens einen Lenkungsgröße (4) und der mindestens einen Kontextinformation (7) zu erkennen und eine zugehörige Zustandsinformation als Ausgangsdaten (20) auszugeben, i) wobei die mindestens eine Lenkungsgröße (4) und die mindestens eine Kontextinformation (7) von separaten Teilen (5-1,5-2) des trainierten Maschinenlernverfahrens (5) verarbeitet werden; und/oder ii) wobei zumindest ein die mindestens eine Lenkungsgröße (4) verarbeitender Teil (5-1) des trainierten Maschinenlernverfahrens (5) ausgehend von der mindestens einen Kontextinformation (7) initialisiert wird. Ferner betrifft die Erfindung eine Vorrichtung (1) zum Erkennen eines Hands-Off-Zustands (6) an einem Lenkrad (51).

## Beschreibung

Die Erfindung betrifft ein Verfahren und eine Vorrichtung zum Erkennen eines Hands-Off-Zustands an einem Lenkrad eines Fahrzeugs.

In Fahrzeugen werden zur Überwachung einer Fahreraktivität Sensoren, wie z.B. ein kapazitives Lenkrad, eingesetzt. Ein solches Lenkrad erkennt eine Berührung oder Nichtberührung ("Hands-Off") des Lenkrades durch den Fahrer mittels eines kapazitiven Sensors. Ein Ergebnis wird nutzenden Funktionen, wie z.B. einem Längs- und/oder Querführungsassistenzsystem, übermittelt. Aus der Berührung der Hände am Lenkrad kann auf eine Fahreraktivität und auf eine Aufmerksamkeit des Fahrers geschlossen werden. Es kann beispielsweise vorgesehen sein, den Fahrer darauf hinzuweisen, die Hände an das Lenkrad zu legen, sofern erkannt wird, dass die Hände während einer Querführung für eine vorgegebene Zeit nicht am Lenkrad waren.

Um zusätzliche Kosten für einen kapazitiven Sensor im Lenkrad zu sparen, ist es bekannt, die Fahreraktivität mit Hilfe von künstlichen Neuronalen Netzen ausgehend von einem am Lenkrad erfassten Drehmoment (Handmoment) zu überwachen. Ein solches Verfahren ist beispielsweise aus der DE 10 2019 211 016 A1 bekannt. Ein weiteres Verfahren ist aus der CN 115782892 A bekannt.

Eine große Herausforderung von lenkmomentbasierten Erkennungen besteht darin, im gemessenen (verrauschten) Lenkmoment, das vom Fahrer induzierte Lenkmoment zu identifizieren. Viele Faktoren können zu einem verrauschten Lenkmoment führen, insbesondere eine Position des Sensors (dieser bildet in der Regel einen Teil des Lenkgetriebes bzw. der Lenkunterstützung, wodurch über die Elastizitäten der Lenksäule in Verbindung mit dem Lenkrad ein drehschwingungsfähiges System entsteht, dessen Eigendynamik die präzise Messung des durch den Fahrer induzierten Moments erschwert); eine Stärke der Reibung im Lenksystem; eine Rückanregung aus der Straße durch Unebenheiten; ein Eigengewicht des Lenkrads / des Lenksystems; eine Vibration des Lenkrads durch eine Assistenzfunktion (z.B. durch eine haptische Rückkopplung beim Verlassen der Fahrbahn).

Zudem können sich die Charakteristiken (die zur Hands-Off-Erkennung genutzt werden) des gemessen Lenkmoments durch äußere Einflüsse verändern, z.B. durch eine Temperatur, einen Beladungszustand des Fahrzeugs, das Vorhandensein eines Anhängers, einen Reifentyp und/oder einen Zustand des Reifens, eine Lenksystemveränderung über die Lebensdauer, eine Fahrbahn-Steigung/Neigung/Schräglage usw.

Ferner haben Eigenschaften einer zum Lenken benutzten Hand und einer Handposition (Griff) Einfluss auf die Sensitivität der Erkennung. Eine große Hand prägt tendenziell mehr Reibung auf als eine kleinere, schmalere Hand. Ebenso bestehen Unterschiede, wenn das Lenkrad nur mit zwei bis drei Fingern umgriffen wird, im Vergleich zu einem Umgreifen mit der gesamten Hand. Auch eine Feuchtigkeit der Handflächen hat einen Einfluss. Sofern diese Informationen vorhanden sind, z.B. über eine Innenraumkamera oder eine Gewichtsmessung am Sitz (zum Ableiten einer Handgröße), können diese mit in die Funktion einfließen.

Für eine möglichst robuste Erkennung des Hands-Off-Zustands ist es insbesondere nötig, dass alle genannten Einflüsse und Szenarien in den Trainingsdaten vorhanden sind. Dies ist in der Praxis jedoch nur schwer möglich, da bereits die Eingangsdaten einen sehr großen Dimensionsraum aufspannen.

Der Erfindung liegt die Aufgabe zu Grunde, ein Verfahren und eine Vorrichtung zum Erkennen eines Hands-Off-Zustands an einem Lenkrad zu verbessern.

Die Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Insbesondere wird ein Verfahren zum Erkennen eines Hands-Off-Zustands an einem Lenkrad eines Fahrzeugs zur Verfügung gestellt, wobei mindestens eine Lenkungsgröße an dem Lenkrad erfasst wird, wobei mindestens eine Kontextinformation erfasst und/oder bestimmt und/oder abgefragt wird, wobei die erfasste mindestens eine Lenkungsgröße und die mindestens eine Kontextinformation einem trainierten Maschinenlernmodell als Eingangsdaten zugeführt werden, wobei das Maschinenlernmodell darauf trainiert ist, einen Hands-Off-Zustand ausgehend von zumindest der mindestens einen Lenkungsgröße und der mindestens einen Kontextinformation zu erkennen und eine zugehörige Zustandsinformation als Ausgangsdaten auszugeben,
i) wobei die mindestens eine Lenkungsgröße und die mindestens eine Kontextinformation von separaten Teilen des trainierten Maschinenlernverfahrens verarbeitet werden;
   und/oder
ii) wobei zumindest ein die mindestens eine Lenkungsgröße verarbeitender Teil des trainierten Maschinenlernverfahrens ausgehend von der mindestens einen Kontextinformation initialisiert wird.

Ferner wird insbesondere eine Vorrichtung zum Erkennen eines Hands-Off-Zustands an einem Lenkrad geschaffen, umfassend mindestens einen Lenkungsgrößensensor, der eingerichtet ist zum Erfassen von mindestens einer Lenkungsgröße an dem Lenkrad, und eine Datenverarbeitungseinrichtung, wobei die Datenverarbeitungseinrichtung dazu eingerichtet ist, die erfasste mindestens eine Lenkungsgröße und mindestens eine erfasste und/oder bestimmte und/oder abgefragte Kontextinformation zu erhalten, ein trainiertes Maschinenlernmodell bereitzustellen und die erfasste mindestens eine Lenkungsgröße und die mindestens eine Kontextinformation dem trainierten Maschinenlernmodell als Eingangsdaten zuzuführen, wobei das Maschinenlernmodell darauf trainiert ist, einen Hands-Off-Zustand ausgehend von zumindest der erfassten mindestens einen Lenkungsgröße und der mindestens einen Kontextinformation zu erkennen und eine zugehörige Zustandsinformation als Ausgangsdaten auszugeben,
i) wobei die mindestens eine Lenkungsgröße und die mindestens eine Kontextinformation von separaten Teilen des trainierten Maschinenlernverfahrens verarbeitet werden;
   und/oder
ii) wobei zumindest ein die mindestens eine Lenkungsgröße verarbeitender Teil des trainierten Maschinenlernverfahrens ausgehend von der mindestens einen Kontextinformation initialisiert wird.

Das Verfahren und die Vorrichtung ermöglichen es, Kontextinformationen beim Erkennen des Hands-Off-Zustands verbessert zu berücksichtigen und dennoch einen Rechen- und Speicherbedarf zu verringern. Einer der Grundgedanken hierbei ist, die erfasste mindestens eine Lenkungsgröße und die mindestens eine Kontextinformation von (insbesondere zumindest abschnittsweise) separaten Teilen des trainierten Maschinenlernverfahrens verarbeiten zu lassen. Hierdurch kann eine Struktur des Maschinenlernmodells weniger komplex ausgebildet sein, da nicht sämtliche Knoten in einer Eingangsschicht sämtliche Eingangsdaten verarbeiten müssen. Ein weiterer der Grundgedanken ist, dass alternativ oder zusätzlich zumindest ein die mindestens eine Lenkungsgröße verarbeitender Teil des trainierten Maschinenlernverfahrens ausgehend von der mindestens einen Kontextinformation initialisiert wird. Anders ausgedrückt wird dieser Teil auf den aktuell vorliegenden und durch die mindestens eine Kontextinformation beschriebenen Kontext vorkonditioniert, sodass eine Genauigkeit beim Erkennen des Hands-Off-Zustands verbessert werden kann.

Eine Lenkungsgröße ist insbesondere eine Größe, welche einen aktuellen Zustand des Lenkrads repräsentiert und/oder beschreibt. Eine Lenkungsgröße ist insbesondere ein Drehmoment, das insbesondere mittels eines Drehmomentsensors am Lenkrad erfasst wird. Grundsätzlich kann eine Lenkungsgröße aber auch eine andere direkt oder indirekt am Lenkrad erfasste Größe sein. Beispielsweise kann vorgesehen sein, einen Strom an einer elektrischen Maschine am Lenkrad zu erfassen und als Lenkungsgröße zu verwenden. Das Erkennen des Hands-Off-Zustands kann ausschließlich ausgehend von der am Lenkrad erfassten Lenkungsgröße, insbesondere einem erfassten Drehmoment, erfolgen. Es ist jedoch insbesondere auch möglich, dass dem Maschinenlernmodell weitere (Lenkungs-)Größen, welche am Lenkrad erfasst werden (z.B. ein Lenkradwinkel und/oder eine Lenkradwinkelgeschwindigkeit etc.) zugeführt werden und das trainierte Maschinenlernmodell den Hands-Off-Zustand unter Berücksichtigung auch dieser weiteren Größe(n) erkennt.

Größen, die nicht am Lenkrad erfasst werden, wie beispielsweise eine Fahrzeuggeschwindigkeit, eine Querbeschleunigung, eine Gierrate, Radticks, Dämpferinformationen und/oder sonstige Fahrdynamikgrößen etc., werden insbesondere als Kontextinformation berücksichtigt. Insbesondere ist jedoch kein kapazitiv arbeitender Sensor am Lenkrad vorgesehen.

Es kann vorgesehen sein, dass im Rahmen des Erkennens des Hands-Off-Zustands auch ein Hands-On-Zustand erkannt wird.

Ein Hands-Off-Zustand ist insbesondere ein Zustand, in dem keine Berührung des Lenkrads durch den Fahrer erfolgt. Insbesondere ist keiner der Finger des Fahrers in Berührung mit dem Lenkrad. Das Erkennen des Hands-Off-Zustands kann insbesondere das Bereitstellen eines Hands-Off-Zustandssignals umfassen. Dieses umfasst beispielsweise eine Hands-Off-Wahrscheinlichkeit oder kodierte Signale für die Zustände "Hands-Off erkannt" und "Hands-Off nicht erkannt". Ein Hands-On-Zustand ist insbesondere ein Zustand, in dem eine Berührung des Lenkrads durch den Fahrer erfolgt. Es kann auch ein Hands-On/Hands-Off-Zustand bereitgestellt, beispielsweise als Hands-On/Hands-Off-Zustandssignal mit insbesondere zumindest zwei Signalzuständen (z.B. "Hands-On erkannt" oder "Hands-Off erkannt").

Ein Kontext bzw. eine Kontextinformation bezeichnet bzw. umfasst insbesondere Eigenschaften einer Situation, in der das Erkennen des Hands-Off-Zustands erfolgen soll und/oder in dem ein oder mehrere Werte der mindestens einen Lenkungsgröße erfasst wurden. Beispiele für Eigenschaften, die einen Kontext bestimmen können, sind: eine Außentemperatur, eine Innentemperatur, eine Lenkradvibration, eine Beladung und/oder ein Gewicht des Fahrzeugs, das Vorhandensein eines Anhängers, das Vorhandensein von Schneeketten, Kopfsteinpflaster, Schlaglöcher, maximale Lenkeingriffe (z.B. Lenkvibration), Bodenschwellen zur Geschwindigkeitsbegrenzung (engl. speed bumps), Eigenschaften (z.B. Identität, Geschlecht, Alter, Gewicht, Handgröße usw.) des Fahrers usw. Der aktuelle Kontext bzw. die mindestens eine Kontextinformation wird insbesondere ausgehend von erfassten Sensordaten erkannt und/oder bestimmt. Es kann beispielsweise vorgesehen sein, bei Anwendung derartige Sensordaten über einen CAN-Bus eines Fahrzeugs abzufragen und/oder von Sensoren und/oder einer Fahrzeugsteuerung des Fahrzeugs zu erhalten.

Das Maschinenlernmodell kann insbesondere ein oder mehrere Neuronales Netze umfassen. Das oder die Neuroanalen Netze können insbesondere mehrere innere Schichten umfassen. Das Maschinenlernmodell umfasst insbesondere ein künstliches rekurrentes Neuronales Netz, das zu jedem Zeitpunkt t die Eingangsdaten Xₜ verarbeitet und eine Hands-Off-Wahrscheinlichkeit yₜ in [0,1] ausgibt: yₜ= p(xₜ | x_{0:t-1}). Hierbei besitzt das rekurrente Neuronale Netz insbesondere ein sogenanntes Gedächtnis h, in dem Informationen aus vorherigen Zeitschritten abgespeichert sind und das für die Ausgabe beim aktuellen Zeitschritt genutzt werden kann.

Die Ausgangsdaten des trainierten Maschinenlernmodells werden z.B. durch eine Filterung weiterverarbeitet, bevor abnehmende Funktionen (z.B. ein Querführungsassistent) diese verarbeiten. Es kann insbesondere vorgesehen sein, dass ausgehend von einem Vergleich der Hands-Off-Wahrscheinlichkeit mit einem vorgegebenen Schwellwert ein binäres Hands-Off-Signal bereitgestellt wird (mit den beiden Zuständen "Hands-Off erkannt" und "Hands-Off nicht erkannt").

Während einer Trainingsphase wird bzw. wurde das Maschinenlernmodell insbesondere in den unterschiedlichen Kontexten, das heißt unter Berücksichtigung der mindestens einen Kontextinformation, mittels Trainingsdaten trainiert, die Paare umfassen, in denen Daten der mindestens einen Lenkungsgröße, insbesondere Drehmomentdaten, mit jeweils einem Hands-Off-Zustand (als Grundwahrheit) gepaart sind. Die Daten der mindestens einen Lenkungsgröße, insbesondere die Drehmomentdaten, sind insbesondere Zeitreihen von der am Lenkrad erfassten mindestens einen Lenkungsgröße, insbesondere Zeitreihen von am Lenkrad erfassten Drehmomenten. Die Trainingsdaten werden insbesondere mit Hilfe von Testfahrten und/oder in Simulatoren gewonnen. Grundsätzlich kann das Bereitstellen von Trainingsdaten hierbei insbesondere gemäß dem in der DE 10 2019 211 016 A1 beschriebenen Verfahren erfolgen. Das Trainieren erfolgt in an sich bekannter Weise insbesondere im Wege des überwachten Lernens.

Teile der Vorrichtung, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Die Datenverarbeitungseinrichtung umfasst insbesondere mindestens eine Recheneinrichtung und mindestens einen Speicher.

In einer Ausführungsform ist vorgesehen, dass bei i) die mindestens eine Lenkungsgröße mittels eines rekurrenten Neuronalen Netzes des trainierten Maschinenlernverfahrens verarbeitet wird, wobei die mindestens eine Kontextinformation mittels eines nicht-rekurrenten Neuronalen Netzes des trainierten Maschinenlernverfahrens verarbeitet wird, und wobei die jeweiligen Ausgaben in mindestens einer Schicht des trainierten Maschinenlernverfahrens zum Bereitstellen der Ausgangsdaten zusammengeführt werden. Hierdurch kann ein Rechen- und Speicherbedarf beim Verarbeiten der mindestens einen Kontextinformation gering gehalten werden, da ein nicht-rekurrentes Neuronales Netz weniger Ressourcen benötigt. Dennoch kann die mindestens eine Kontextinformation beim Erkennen des Hands-Off-Zustands berücksichtigt werden. Es kann beispielsweise vorgesehen sein, dass die jeweiligen Ausgaben in einem Dense Layer bzw. fully-connected Layer zusammengeführt werden, um die Ausgangsdaten zu erzeugen. Während eines Trainingsverfahrens werden beide Neuronalen Netze gleichzeitig trainiert. Das nicht-rekurrente Neuronale Netz ist insbesondere im Hinblick auf eine Struktur kleiner als das rekurrente Neuronale Netz ausgebildet.

In einer Ausführungsform ist vorgesehen, dass bei ii) ausgehend von der mindestens einen Kontextinformation mittels einer Abbildungsvorschrift Startparameter zumindest des die erfasste mindestens eine Lenkungsgröße verarbeitenden Teils des trainierten Maschinenlernmodells bestimmt werden, wobei dieser Teil mittels der bestimmten Startparameter initialisiert wird. Die Abbildungsvorschrift ist derart ausgestaltet, dass die mindestens eine Kontextinformation auf Werte der Startparameter abgebildet wird. Hierdurch können die Startparameter mittels der Abbildungsvorschrift ausgehend von dem aktuellen Kontext bereitgestellt werden.

In einer Ausführungsform ist vorgesehen, dass die Abbildungsvorschrift mittels eines trainierten Neuronalen Netzes bereitgestellt wird. Hierdurch können die Startparameter für beliebige Kontexte bzw. Kontextinformationen geschätzt und bereitgestellt werden. Das trainierte Neuronale Netz ist insbesondere als Dense Layer Netz bzw. fully-connected Netz ausgebildet. Das Neuronale Netz wird während der Trainingsphase des (gesamten) Maschinenlernmodells trainiert. Während einer Inferenzphase wird das Neuronale Netz für die Abbildungsvorschrift jedoch nur ein einziges Mal ausgeführt, um ausgehend von einem gegebenen Kontext bzw. der gegebenen mindestens eine Kontextinformation die Startparameter bereitzustellen. Nach dem Initialisieren wird das Neuronale Netz für die Abbildungsvorschrift insbesondere nicht mehr verwendet.

In einer Ausführungsform ist vorgesehen, dass der zumindest die erfasste mindestens eine Lenkungsgröße verarbeitende Teil des trainierten Maschinenlernmodells als rekurrentes Neuronales Netz ausgebildet ist, wobei die Startparameter zumindest ein Gedächtnis des rekurrenten Neuronalen Netzes umfassen. Hierdurch kann das Gedächtnis entgegen dem üblichen Vorgehen, dieses mit Nullen oder zufälligen Werten zu füllen, bei der Initialisierung mit geeigneten Werten befüllt werden. Hierdurch kann eine funktionale Güte von Anfang an gesteigert werden.

In einer Ausführungsform ist vorgesehen, dass ein die Abbildungsvorschrift bereitstellender Teil des trainierten Maschinenlernmodells nach dem Initialisieren deaktiviert wird. Hierdurch können Rechen- und Speicherressourcen eingespart werden, wenn die Abbildungsvorschrift nicht benötigt wird.

In einer Ausführungsform ist vorgesehen, dass bei ii) im Falle einer Änderung der mindestens einen Kontextinformation das Initialisieren erneut durchgeführt wird. Hierdurch kann auf eine Änderung des Kontextes reagiert werden und der die mindestens eine Lenkungsgröße verarbeitende Teil des trainierten Maschinenlernverfahrens ausgehend von dem geänderten Kontext bzw. der geänderten mindestens einen Kontextinformation neu initialisiert werden. Es kann vorgesehen sein, dass eine Änderung des Kontextes bzw. der mindestens einen Kontextinformation hierzu einen vorgegebenen Schwellwert überschreiten muss, damit eine erneute Initialisierung durchgeführt wird. Die Änderung kann beispielsweise mittels einer geeigneten Maßgröße quantifiziert werden, dessen Wert mit dem vorgegebenen Schwellwert verglichen werden kann. Wurde der die Abbildungsvorschrift bereitstellende Teil des trainierten Maschinenlernverfahrens deaktiviert, so wird dieser Teil nach Feststellen der Änderung der mindestens einen Kontextinformation zum erneuten Initialisieren aktiviert. Nach dem erneuten Initialisieren kann dieser Teil dann wieder deaktiviert werden usw.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird ferner auch ein Lenksystem geschaffen, umfassend eine Vorrichtung nach einer der beschriebenen Ausführungsformen.

Weiter wird auch ein Fahrzeug geschaffen, umfassend ein Lenksystem nach einer der beschriebenen Ausführungsformen und/oder eine Vorrichtung nach einer der beschriebenen Ausführungsformen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung zur Verdeutlichung von Ausführungsformen der Vorrichtung zum Erkennen eines Hands-Off-Zustands an einem Lenkrad;
- Fig. 2: eine schematische Darstellung zur Verdeutlichung von Ausführungsformen des Verfahrens und der Vorrichtung;
- Fig. 3: eine schematische Darstellung zur Verdeutlichung von Ausführungsformen des Verfahrens und der Vorrichtung;
- Fig. 4: eine schematische Darstellung zur Verdeutlichung einer Ausführungsform des Verfahrens und der Vorrichtung.

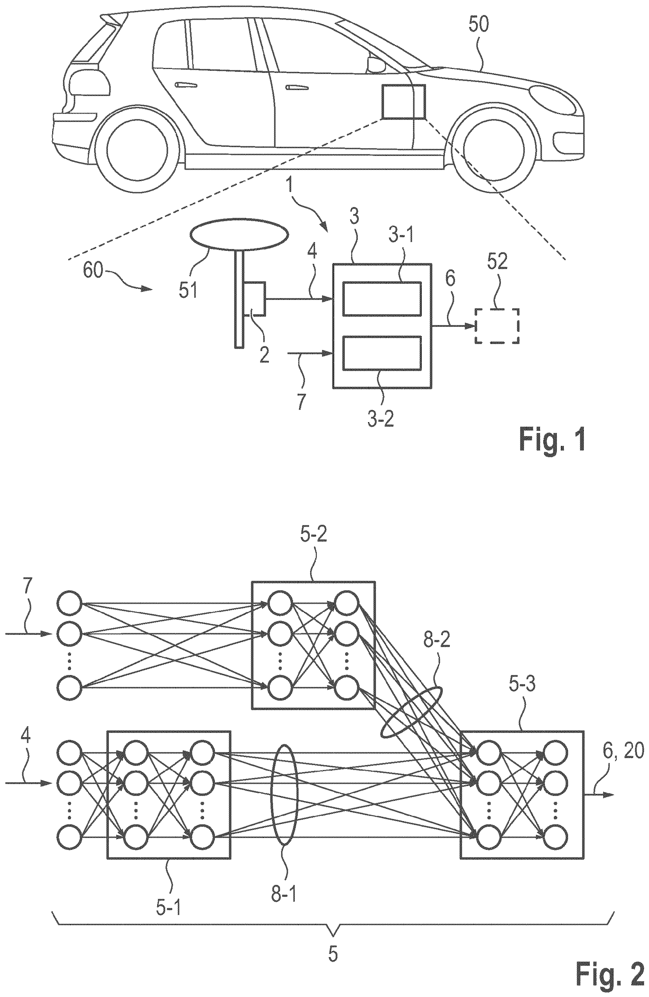

Die Fig. 1 zeigt eine schematische Darstellung einer Ausführungsform der Vorrichtung 1 zum Erkennen eines Hands-Off-Zustands 6 an einem Lenkrad 51. Die Vorrichtung 1 ist insbesondere in einem Fahrzeug 50 angeordnet und dort Teil eines Lenksystems 60. Das in dieser Offenbarung beschriebene Verfahren wird nachfolgend anhand der Vorrichtung 1 verdeutlicht und näher erläutert.

Die Vorrichtung 1 umfasst einen Lenkungsgrößensensor 2 und eine Datenverarbeitungseinrichtung 3. Der Lenkungsgrößensensor 2 ist dazu eingerichtet, eine Lenkungsgröße 4 an dem Lenkrad 51 des Fahrzeugs 50 zu erfassen. Der Lenkungsgrößensensor 2 ist beispielsweise ein Drehmomentsensor und die Lenkungsgröße 4 ein Drehmoment. Grundsätzlich können alternativ oder zusätzlich weitere Lenkungsgrößensensoren vorgesehen sein, die weitere Lenkungsgrößen erfassen.

Die Datenverarbeitungseinrichtung 3 umfasst eine Recheneinrichtung 3-1 und einen Speicher 3-2. Die Recheneinrichtung 3-1 ist dazu eingerichtet, für das Durchführen von Maßnahmen des Verfahrens notwendige Rechenoperationen durchzuführen und kann hierzu auf in dem Speicher 3-2 hinterlegte Daten zugreifen.

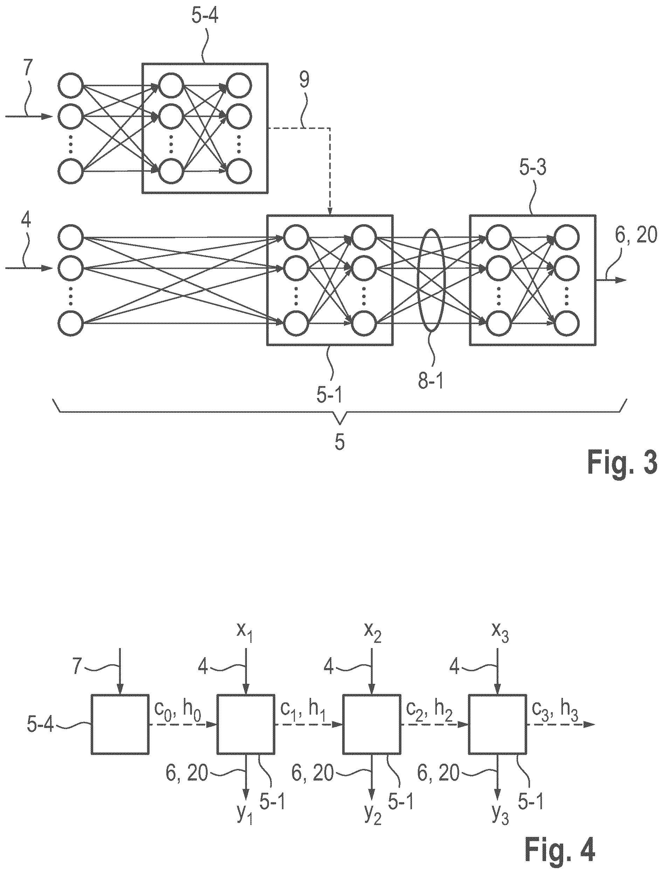

Die Datenverarbeitungseinrichtung 3 ist dazu eingerichtet, die erfasste mindestens eine Lenkungsgröße 4 und mindestens eine erfasste und/oder bestimmte und/oder abgefragte Kontextinformation 7 zu erhalten, ein trainiertes Maschinenlernmodell 5 (vgl. auch Figuren 2 und 3) bereitzustellen und die erfasste mindestens eine Lenkungsgröße 4 und die mindestens eine Kontextinformation 7 dem trainierten Maschinenlernmodell 5 als Eingangsdaten zuzuführen.

Das Maschinenlernmodell 5 ist darauf trainiert, einen Hands-Off-Zustand 6 ausgehend von zumindest der erfassten mindestens einen Lenkungsgröße 4 und der mindestens einen Kontextinformation 7 zu erkennen und ein zugehöriges Zustandssignal oder eine zugehörige Zustandsinformation als Ausgangsdaten 20 auszugeben.

Hierbei ist in einer Variante (als i) bezeichnet) vorgesehen, dass die mindestens eine Lenkungsgröße 4 und die mindestens eine Kontextinformation 7 von separaten Teilen des trainierten Maschinenlernverfahrens 5 verarbeitet werden.

Zusätzlich oder alternativ ist in einer anderen Variante (als ii) bezeichnet) vorgesehen, dass zumindest ein die mindestens eine Lenkungsgröße 4 verarbeitender Teil des trainierten Maschinenlernverfahrens 5 ausgehend von der mindestens einen Kontextinformation 7 initialisiert wird.

Der Hands-Off-Zustand 6 wird beispielsweise als Zustandssignal oder Zustandsinformation einem Steuergerät 52 des Fahrzeugs 50 zur weiteren Verarbeitung zugeführt. Das Steuergerät 52 kann beispielsweise ein Querführungsassistent oder ein anderes Assistenzsystem sein. Das Zustandssignal oder die Zustandsinformation kann beispielsweise eine Hands-Off-Wahrscheinlichkeit beinhalten oder einen binären Zustandswert mit den beiden Zuständen "Hands-Off erkannt" und "Hands-Off nicht erkannt".

Die Fig. 2 zeigt eine schematische Darstellung zur Verdeutlichung der Variante i). Das trainierte Maschinenlernverfahren 5 umfasst hierbei einen ersten Teil 5-1, der insbesondere als Neuronales Netz ausgebildet ist und der die erfasste mindestens eine Lenkungsgröße 4 verarbeitet. Ferner umfasst das trainierte Maschinenlernverfahren 5 einen zweiten Teil 5-2, der insbesondere als Neuronales Netz ausgebildet ist und der die mindestens eine Kontextinformation 7 verarbeitet. Weiter umfasst das trainierte Maschinenlernverfahren 5 einen dritten Teil 5-3, der beispielsweise als Neuronales Netz mit mindestens einer Schicht ausgebildet ist. Ausgaben 8-1, 8-2 der Teile 5-1, 5-2, insbesondere der jeweiligen Neuronalen Netze, werden mittels des dritten Teils 5-3 zusammengeführt und ein Ergebnis für den Hands-Off-Zustand 6 wird vom dritten Teil 5-3 als Ausgangsdaten 20 bereitgestellt.

Es kann vorgesehen sein, dass in der Variante i) die mindestens eine Lenkungsgröße 4 mittels eines rekurrenten Neuronalen Netzes des trainierten Maschinenlernverfahrens 5 verarbeitet wird, wobei die mindestens eine Kontextinformation 7 mittels eines nicht-rekurrenten Neuronalen Netzes des trainierten Maschinenlernverfahrens 5 verarbeitet wird, wobei die jeweiligen Ausgaben in mindestens einer Schicht des trainierten Maschinenlernverfahrens 5 zum Bereitstellen der Ausgangsdaten 20 zusammengeführt werden. Der erste Teil 5-1 umfasst insbesondere das rekurrente Neuronale Netz, der zweite Teil 5-2 umfasst insbesondere das nicht-rekurrente Neuronale Netz und der dritte Teil 5-3 umfasst insbesondere die mindestens eine Schicht. Das nicht-rekurrente Neuronale Netz ist insbesondere im Hinblick auf eine Struktur kleiner als das rekurrente Neuronale Netz ausgebildet.

Die Fig. 3 zeigt eine schematische Darstellung zur Verdeutlichung einer Ausführungsform des Verfahrens und der Vorrichtung mit Bezug auf die Variante ii). Es ist bei dieser Ausführungsform vorgesehen, dass ausgehend von der mindestens einen Kontextinformation 7 mittels einer Abbildungsvorschrift 5-4 Startparameter 9 zumindest des die erfasste mindestens eine Lenkungsgröße 4 verarbeitenden Teils 5-1 des trainierten Maschinenlernmodells 5 bestimmt werden, wobei dieser Teil 5-1 mittels der bestimmten Startparameter 9 initialisiert wird. Dies erfolgt insbesondere nur für einen einzigen Zeitschritt, in dem alle Parameter des ersten Teils 5-1 mittels der Startparameter 9 initialisiert werden.

Nach dem Initialisieren wird die Abbildungsvorschrift 5-4 nicht weiter verwendet. Es kann vorgesehen sein, dass ein die Abbildungsvorschrift 5-4 bereitstellender Teil des trainierten Maschinenlernmodells 5 nach dem Initialisieren deaktiviert wird.

Es kann vorgesehen sein, dass die Abbildungsvorschrift 5-4 mittels eines trainierten Neuronalen Netzes bereitgestellt wird. Das trainierte Neuronale Netz kann beispielsweise einen Dense-Layer bzw. einen fully-connected Layer umfassen. Insbesondere bildet die Abbildungsvorschrift 5-4 eine affine Transformation aus. Anders ausgedrückt schätzt das trainierte Neuronale Netz der Abbildungsvorschrift 5-4 die Startparameter 9 ausgehend von der als Eingangsdaten zugeführten mindestens einen Kontextinformation 7.

Eine affine Transformation wird insbesondere benötigt, um eine Menge von Kontextinformationen (z.B. eine Anzahl von Klassen oder Kategorien, z.B. 3) in eine geeignete Vektorgröße für die Initialisierung zu transformieren (z.B. bei einem LSTM mit 16 Units wird insbesondere ein Vektor der Länge 16 benötigt). Die affine Transformation kann als klassischer Dense-Layer implementiert werden (z.B. 3 Eingänge, 16 Ausgänge). Dieser zusätzliche Dense-Layer (affine Transformation) gehört als Abbildungsvorschrift 5-4 mit zum Maschinenlernmodell 5, wird aber nur vor der erstem Zeitschritt (vgl. Fig. 4: t = 1) verwendet, also beim Zeitschritt t = 0. Hierbei wird die mindestens eine Kontextinformation 7 (z.B. Anhänger vorhanden, Beladungszustand, Reifentyp usw.) als Eingangsdaten der affinen Transformation zugeführt. Eine Ausgabe der affinen Transformation bzw. des Dense-Layers wird jedoch nicht als Eingangsdaten des Teils 5-1 verwendet, sondern initialisiert einen internen Zustand des Teils 5-1. Anders ausgedrückt werden die Werte nur einmal vor der eigentlichen Inferenz mit den kontinuierlichen (Zeitschritte t = 1...T) Daten (z.B. Lenkmoment, Lenkradwinkel) übernommen.

Die Abbildungsvorschrift 5-4, insbesondere der Dense-Layer, wird in der Trainingsphase des Maschinenlernverfahrens 5 ebenfalls mittrainiert. In einem beispielhaften Many2One-Training besteht ein Datenpunkt aus kontinuierlichen Daten (einer Matrix der Größe n x T), einer Grundwahrheit (Skalar) zum Zeitpunkt t = T sowie der mindestens einen Kontextinformation 7 (einem Vektor der Länge m). Das Maschinenlernverfahren (bzw. die jeweiligen Teile 5-1, 5-3, 5-4) wird wie voranstehend bereits beschrieben inferiert. Anschließend wird ein Fehler zum Zeitpunkt t = T zwischen einer Ausgabe und der Grundwahrheit verglichen. Dieser Fehler wird für jeden Zeitschritt zurückgerechnet/propagiert bis zur Initialisierung (t = 0), wodurch auch der Dense-Layer der Abbildungsvorschrift 5-4 gelernt wird.

Es kann vorgesehen sein, dass der zumindest die erfasste mindestens eine Lenkungsgröße 7 verarbeitende Teil 5-1 des trainierten Maschinenlernmodells 5 als rekurrentes Neuronales Netz, beispielsweise als Long short-term memory (LSTM), ausgebildet ist, wobei die Startparameter 9 zumindest ein Gedächtnis (typischerweise mit dem Buchstaben h bezeichnet) des rekurrenten Neuronalen Netzes umfassen. Ferner können die Startparameter 9 weitere Parameter des rekurrenten Neuronalen Netzes umfassen. Insbesondere kann vorgesehen sein, dass die Startparameter 9 die Parameter c₀ (Zellzustand) und h₀ (Gedächtnis) des LSTM umfassen.

Es kann vorgesehen sein, dass bei Variante ii) im Falle einer Änderung der mindestens einen Kontextinformation 7 das Initialisieren erneut durchgeführt wird.

Der Ablauf der Variante ii) ist zur Verdeutlichung nochmal schematisch in der Fig. 4 gezeigt. Es sind die Initialisierung zum Zeitpunkt t = 0 gezeigt sowie drei nachfolgende Zeitschritte für die Zeitpunkte t = 1, 2, 3 (jeweils als Index gekennzeichnet). Zum Zeitpunkt t = 0 werden die Startparameter 9 des Teils 5-1 des trainierten Maschinenlernverfahrens mittels der Abbildungsvorschrift 5-4, insbesondere mittels des hierfür trainierten Neuronalen Netzes, geschätzt. Die Startparameter 9 umfassen im gezeigten Beispiel beim Zeitpunkt t = 0 die Werte co und ho. Zu jedem nachfolgenden Zeitschritt erhält der Teil 5-1 Werte Xₜ der mindestens einen Lenkungsgröße 4 zugeführt und erkennt ausgehend hiervon den Hands-Off-Zustand 6 und gibt zugehörige Werte yₜ aus. Im jeweils nachfolgenden Zeitschritt werden die Parameter des vorherigen Zeitschritts berücksichtigt, im gezeigten Beispiel jeweils die Parameter cₜ und hₜ.

Grundsätzlich können die Varianten i) und ii) auch miteinander kombiniert werden.

### Bezugszeichenliste

- 1: Vorrichtung
- 2: Lenkungsgrößensensor
- 3: Datenverarbeitungseinrichtung
- 3-1: Recheneinrichtung
- 3-2: Speicher
- 4: Lenkungsgröße
- 5: trainiertes Maschinenlernmodell
- 5-1: erster Teil
- 5-2: zweiter Teil
- 5-3: dritter Teil (min. eine Schicht)
- 5-4: Abbildungsvorschrift
- 6: Hands-Off-Zustand
- 7: Kontextinformation
- 8-1: Ausgabe
- 8-2: Ausgabe
- 9: Startparameter
- 20: Ausgangsdaten
- 50: Fahrzeug
- 51: Lenkrad
- 52: Steuergerät
- 60: Lenksystem
- cₜ: Zellzustand
- h,: Gedächtnis
- t: Zeitpunkt

## Patentansprüche

1. Verfahren zum Erkennen eines Hands-Off-Zustands (6) an einem Lenkrad (50) eines Fahrzeugs (50),
wobei mindestens eine Lenkungsgröße (4) an dem Lenkrad (51) erfasst wird,
wobei mindestens eine Kontextinformation (7) erfasst und/oder bestimmt und/oder abgefragt wird,
wobei die erfasste mindestens eine Lenkungsgröße (4) und die mindestens eine Kontextinformation (7) einem trainierten Maschinenlernmodell (5) als Eingangsdaten zugeführt werden, wobei das Maschinenlernmodell (5) darauf trainiert ist, einen Hands-Off-Zustand (6) ausgehend von zumindest der mindestens einen Lenkungsgröße (4) und der mindestens einen Kontextinformation (7) zu erkennen und eine zugehörige Zustandsinformation als Ausgangsdaten (20) auszugeben,
i) wobei die mindestens eine Lenkungsgröße (4) und die mindestens eine Kontextinformation (7) von separaten Teilen (5-1,5-2) des trainierten Maschinenlernverfahrens (5) verarbeitet werden;
und/oder
ii) wobei zumindest ein die mindestens eine Lenkungsgröße (4) verarbeitender Teil (5-1) des trainierten Maschinenlernverfahrens (5) ausgehend von der mindestens einen Kontextinformation (7) initialisiert wird.

2. Verfahren nach Anspruch 1, **dadurch gekennzeichnet, dass** bei i) die mindestens eine Lenkungsgröße (4) mittels eines rekurrenten Neuronalen Netzes des trainierten Maschinenlernverfahrens (5) verarbeitet wird, wobei die mindestens eine Kontextinformation (7) mittels eines nicht-rekurrenten Neuronalen Netzes des trainierten Maschinenlernverfahrens (5) verarbeitet wird, und wobei die jeweiligen Ausgaben (8-1,8-2) in mindestens einer Schicht (5-3) des trainierten Maschinenlernverfahrens (5) zum Bereitstellen der Ausgangsdaten (20) zusammengeführt werden.

3. Verfahren nach Anspruch 1 oder 2, **dadurch gekennzeichnet, dass** bei ii) ausgehend von der mindestens einen Kontextinformation (7) mittels einer Abbildungsvorschrift (5-4) Startparameter (9) zumindest des die erfasste mindestens eine Lenkungsgröße (4) verarbeitenden Teils (5-1) des trainierten Maschinenlernmodells (5) bestimmt werden, wobei dieser Teil (5-1) mittels der bestimmten Startparameter (9) initialisiert wird.

4. Verfahren nach Anspruch 3, **dadurch gekennzeichnet, dass** die Abbildungsvorschrift (5-4) mittels eines trainierten Neuronalen Netzes bereitgestellt wird.

5. Verfahren nach Anspruch 3 oder 4, **dadurch gekennzeichnet, dass** der zumindest die erfasste mindestens eine Lenkungsgröße (4) verarbeitende Teil (5-1) des trainierten Maschinenlernmodells (5) als rekurrentes Neuronales Netz ausgebildet ist, wobei die Startparameter (9) zumindest ein Gedächtnis des rekurrenten Neuronalen Netzes umfassen.

6. Verfahren nach einem der Ansprüche 3 bis 5, **dadurch gekennzeichnet, dass** ein die Abbildungsvorschrift (5-4) bereitstellender Teil des trainierten Maschinenlernmodells (5) nach dem Initialisieren deaktiviert wird.

7. Verfahren nach einem der vorangegangenen Ansprüche, **dadurch gekennzeichnet, dass** bei ii) im Falle einer Änderung der mindestens einen Kontextinformation (7) das Initialisieren erneut durchgeführt wird.

8. Vorrichtung (1) zum Erkennen eines Hands-Off-Zustands (6) an einem Lenkrad (51), umfassend:
mindestens einen Lenkungsgrößensensor (2), der eingerichtet ist zum Erfassen von mindestens einer Lenkungsgröße (4) an dem Lenkrad (51), und
eine Datenverarbeitungseinrichtung (3), wobei die Datenverarbeitungseinrichtung (3) dazu eingerichtet ist, die erfasste mindestens eine Lenkungsgröße (4) und mindestens eine erfasste und/oder bestimmte und/oder abgefragte Kontextinformation (7) zu erhalten, ein trainiertes Maschinenlernmodell (5) bereitzustellen und die erfasste mindestens eine Lenkungsgröße (4) und die mindestens eine Kontextinformation (7) dem trainierten Maschinenlernmodell (5) als Eingangsdaten zuzuführen, wobei das Maschinenlernmodell (5) darauf trainiert ist, einen Hands-Off-Zustand (6) ausgehend von zumindest der erfassten mindestens einen Lenkungsgröße (4) und der mindestens einen Kontextinformation (7) zu erkennen und eine zugehörige Zustandsinformation als Ausgangsdaten (20) auszugeben,
i) wobei die mindestens eine Lenkungsgröße (4) und die mindestens eine Kontextinformation (7) von separaten Teilen (5-1,5-2) des trainierten Maschinenlernverfahrens (5) verarbeitet werden;
und/oder
ii) wobei zumindest ein die mindestens eine Lenkungsgröße (4) verarbeitender Teil (5-1) des trainierten Maschinenlernverfahrens (5) ausgehend von der mindestens einen Kontextinformation (7) initialisiert wird.

9. Lenksystem (60), umfassend eine Vorrichtung (1) nach Anspruch 8.

10. Fahrzeug (50), umfassend ein Lenksystem (60) nach Anspruch 9 und/oder eine Vorrichtung (1) nach Anspruch 8.
